Europäisches Patentamt

(19) European Patent Office

Office européen des brevets

(11) Publication number: **0 437 965 A2**

(12) # EUROPEAN PATENT APPLICATION

(21) Application number: **90314077.0**

(51) Int. Cl.⁵: **H04N 5/60**

(22) Date of filing: **20.12.90**

The title of the invention has been amended (Guidelines for Examination in the EPO, A-III, 7.3).

(30) Priority: **21.12.89 KR 1976889**

(43) Date of publication of application:
**24.07.91 Bulletin 91/30**

(84) Designated Contracting States:
**DE GB SE**

(71) Applicant: **SAMSUNG ELECTRONICS CO. LTD.**
**416 Maetan-Dong, Kwonsun-ku**
**Suwon, Kyunggi-do (KR)**

(72) Inventor: **Na, Il-Gu**
**3-406, Miryung Apt. 416, Pisan-dong**
**Anyang-city, Kyunggi-do (KR)**

(74) Representative: **Stanley, David William et al**
**APPLEYARD LEES 15 Clare Road**
**Halifax West Yorkshire HX1 2HY (GB)**

(54) Broadcast receiving apparatus for television signals.

(57) A dual NICAM broadcast receiving apparatus for receiving both PAL-I type NICAM broadcasts and PAL-B/G type NICAM broadcasts in Europe is disclosed. Only an intermediate frequency of 38.9 MHz is output from a tuner 1 for a compatible design. The receiving apparatus is provided with a plurality of switches 18-20 which are operated by a control signal BG/I supplied from the outside, based on whether the input signal to the apparatus is PAL-I broadcast standard or PAL-B/G broadcast standard.

EP 0 437 965 A2

FIG.1

# BROADCAST RECEIVING APPARATUS

The present invention generally relates to broadcast receiving apparatus and particularly although not exclusively to a multiplex stereophonic demodulating circuit incorporated in a television or a video cassette recorder.

The NICAM (Near Instantaneous Compand Audio Multiplex) broadcast system recently introduced in Europe is undergoing a test broadcasting stage in some countries, and is divided into two broadcast systems: the PAL-I type NICAM which is likely to be adopted in Great Britain, and the PAL-B/G type NICAM which is to be adopted in North Europe including Sweden, Norway, and Finland.

The PAL-I type NICAM and PAL-B/G type NICAM systems, as shown in Table 1 below, have substantially identical format in the broadcast system except for RF frequency thereof.

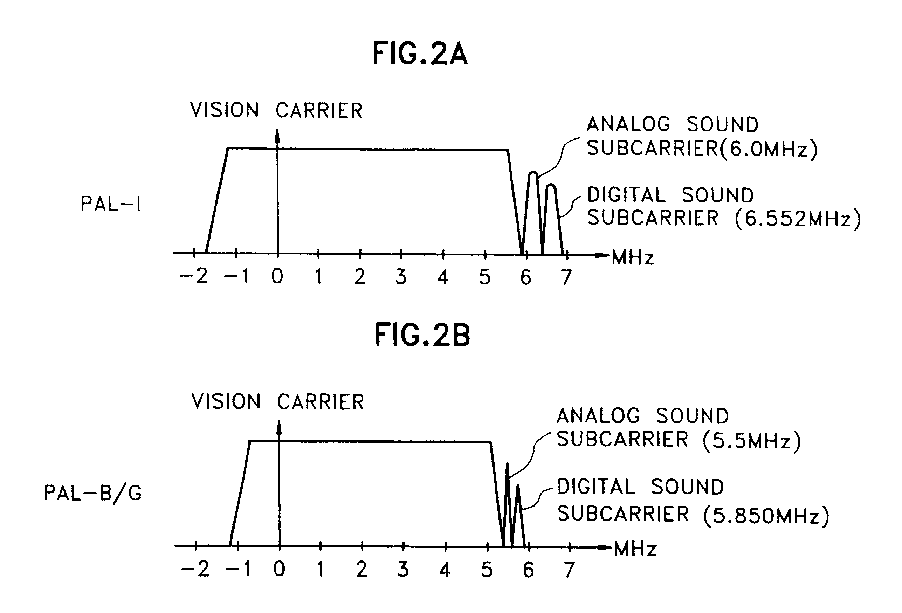

Referring to Table 1, the respective baseband characteristics of the PAL-I and PAL-B/G NICAM broadcast systems can be seen. In Figures 2A and 2B of the accompanying diagrammatic drawings, the RF (Radio Frequency) signal spectra of the respective PAL-I and PAL-B/G broadcasts are represented.

Due to the differences in the respective systems in Europe, each broadcast system, PAL-I NICAM and PAL-B/G NICAM generally requires its own separate receiving apparatus to listen to and view that particular broadcast.

| Table 1 | | | |
|---|---|---|---|
| Baseband characteristic of NICAM broadcasting system | | | |
| | | PAL-I | PAL-B/G |
| Analog Sound | Modulation | FM | |
| | Subcarrier frequency | 6.0MHz | 5.5MHz |
| | Signal level (Video:Audio) | 10:1 | 20:1 |
| Digital Sound | Modulation | QPSK bit rate 728 Kbit/sec | |
| | Subcarrier frequency | 6.552MHz | 5.850MHz |
| | Signal level (Video:QPSK) | 100:1 | 100:1 |
| | Transmission filter roll-off rate | 100% | 40% |

Preferred embodiments of the present invention aim to provide a dual NICAM broadcast receiving apparatus compatible with both PAL-I and PAL-B/G broadcast systems, which can receive selectively not only PAL-I NICAM broadcasts but also PAL-B/G NICAM broadcasts in Europe.

According to one aspect of the present invention, there is provided a dual NICAM broadcast receiving apparatus for receiving both a PAL-I type NICAM broadcast and a PAL-B/G type NICAM broadcast, the apparatus comprising :

a video signal processing unit for amplifying and detecting an intermediate frequency from a tuner according to channel selection controlled by a microcomputer, for extracting and processing only a video signal; and

3

audio signal processing unit for processing a main channel audio signal be detecting the intermediate frequency output from the tuner through a sound intermediate frequency (SIF) detector, and for processing subchannel signals by outputting an analog signal through a D/A converter after passing through a respective filter selected by a control signal (BG/I) based on whether the subchannel signal output from the SIF detector is PAL-I type broadcast standard or PAL-B/G type broadcast standard.

Preferably, said video processing unit comprises a video intermediate frequency (VIF) surface acoustic wave (SAW) filter for passing video intermediate frequency, a VIF detector for outputting a composite video signal by video-detecting and demodulating the output signal from said SAW filter, and an audio signal trap means for eliminating audio signals from the output signal of the video detector.

Preferably, said audio signal processing unit comprises :

said SIF detector for outputting the main channel and subchannel audio signals by detecting the intermediate frequency output from the tuner through a SIF SAW filter ;

switching means for selectively switching the subchannel audio signals in response to said control signal (BG/I), based on whether the signals are PAL-I signals or PAL-B/G signals ;

band pass filters for selectively passing each signal based on the output of the switching means ;

a phase demodulator for outputting data and output signals by demodulating a digital sound modulating signal according to the output of an oscillator which is selectively operated by the signal output from the band pass filters ;

a NICAM decoder for processing data and clock signals output from the demodulator ; and

said digital-to-analog converter for converting the output signal from the NICAM decoder to said analog signal and for outputting left and right channel signals.

Preferably, only an intermediate frequency of 38.9 MHZ is output from the tuner.

Preferably, a 5.5 MHZ filter which is used to pass PAL-B/G signals and a 6.0 MHZ filter which is used to pass PAL-I signals are connected to the SIF detector.

Preferably, a switching means is connected between said 5.5 MHZ filter and said 6.0 MHZ filter for selectively switching said two filters.

Preferably, said band pass filters comprise a first band pass filter for passing PAL-B/G type broadcast signals and a second band pass filter for passing PAL-I type broadcast signals.

Preferably, a switching means is connected between the phase demodulator and the oscillator for selectively switching the output of the oscillator.

Preferably, said means are selectively switched by an external control signal (BG/I).

For a better understanding of the invention, and to show how the same may be carried into effect, reference will now be made, by way of example, to the accompanying diagrammatic drawings, in which :

Figure 1 is a circuit diagram of one embodiment of a dual NICAM broadcast receiving apparatus according to the present invention ; and

Figures 2A and 2B are graphical illustrations of frequency-shifted spectra of PAL-I and PAL-B/G broadcasts, respectively.

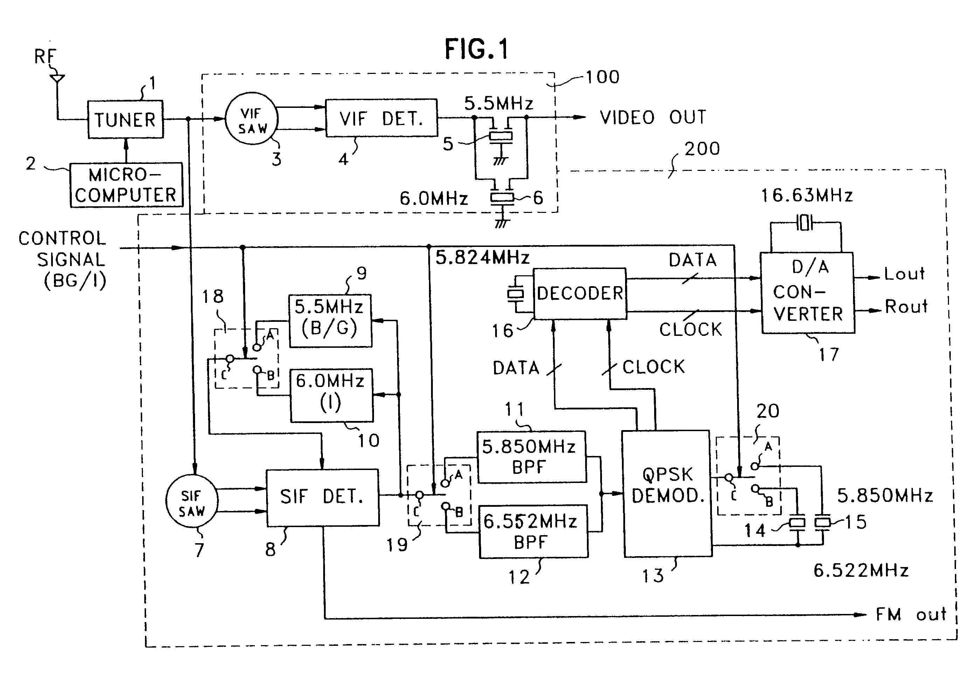

Referring to Figure 1, there is shown one example of a preferred embodiment of the present invention, for compatibly receiving both PAL-I and PAL-B/G type NICAM broadcasts. The apparatus comprises a video signal processing unit 100 and an audio signal processing unit 200.

In Figure 1, an IF signal output from a tuner 1 according to a channel selection signal from a microcomputer 2 is applied to a video intermediate frequency (VIF) detector 4 through a surface acoustic wave (SAW) filter 7, then output as a composite video signal through a 5.5 MHz trap 5 or 6.0 MHz trap 6 for eliminating audio signals.

The 5.5 MHz trap 5 is used to eliminate the audio component of PAL-B/G type broadcasts while the 6.0 MHz trap 6 is used to eliminate the audio component of PAL-I type broadcasts.

In the meanwhile, the IF signal of 38.9 MHz output from the tuner 1 is applied to a sound detector 8 through a SIF (sound intermediate frequency) SAW filter 7 so that FM sound can be output with the use of 5.5 MHz and 6.0 MHz filters 9 and 10.

In addition, the FM sound output from the SIF detector 8 is applied to a phase demodulator 13 through band pass filters 11 and 12 for passing only a digital sound subcarrier component.

The operation of the SIF detectors 9 and 10 and band pass filters 11 and 12 is selected by a control signal BG/I supplied from an external key (not shown), according to whether the broadcast to be received is PAL-B/G or PAL-I.

The phase demodulator 13 demodulates the modulation signal of the digital sound by oscillators 14 and 15 which are selected by the control signal BG/I and then outputs data and clock signals.

The data and clock signals from the phase demodulator 13 are supplied to a NICAM decoder 16. Next, the NICAM decoder reads the data, and outputs the sound data to a digital-to-analog convert 17.

It is to be noted that the operations of the SIF filters 9 and 10, band pass filters 11 and 12, and oscillators 14 and 15 are selected by first, second and third switches 18, 19 and 20, which each receive the control signal BG/I. Each of the switches 18, 19 and 20 has a common terminal C which connected to a respective terminal A in the case of PAL-B/G and to a respective terminal B in the case of PAL-I.

Now, the overall operation of the illustrated apparatus will be described in more detail, as one example.

Conventionally, the video intermediate frequencies in PAL-B/G and PAL-I broadcast systems are set to 38.9 MHz and 39.5 MHz, respectively.

However, in the example of the illustrated apparatus, for both PAL-B/G and PAL-I broadcasts, only the intermediate frequency of 38.9 MHz is output from the tuner 1, to achieve compatibility.

That is, since the intermediate frequency (IF) equals local oscillating frequency minus RF signal, the intermediate frequency of 38.9 MHz can be obtained by controlling the local oscillating frequency by the microcomputer 2.

The intermediate frequency of 38.9 MHz output from the tuner 1 is applied to the VIF detector 4 through the VIF SAW filter 3 and the resultant signal is output to the SIF traps 5 and 6 which are connected in parallel to each other. The SIF traps 5 and 6 eliminate the sound signal of the composite video component, the 5.5 MHz trap 5 eliminating the sound signal of PAL-B/G systems and the 6.0 MHz trap eliminating the sound signal of PAL-I systems.

The video signal from which the sound signal is eliminated is output through a video processor (not shown).

In the meanwhile, the intermediate frequency output from the tuner 1 is detected by the sound detector 8 through the SIF SAW filter 7 to output the FM sound.

That is, in the case of PAL-B/G system, the C terminal of the first switch 18 is connected to the terminal A in response to the control signal BG/I, so that the FM sound is detected by the sound detector 8 via the 5.5 MHz filter 9, while, in the case of PAL-I system, the C terminal of the first switch 18 is connected to the terminal B via the 6.0 MHz SIF detector 10.

The FM signal from the sound detector 8 is applied to the phase demodulator 13 after passing selectively either the 5.850 MHz band pass filter 11 or the 6.550 MHz band pass filter 12 through the second switch 19.

The band pass filters 11 and 12 are selected by the second switch 19, which is operated by means of the control signal BG/I in a manner similar to that of the first switch.

Thus, the control signal BG/I allows the terminal A of the second switch 19 to be selected in the case of the PAL-B/G system, so that the sound signal can be passed through the 5.850 MHz band pass filter 11, and the control signal BG/I allows the terminal B of the second switch 19 to be selected in the case of the PAL-I system, so that the sound signal can pass through the 6.550 MHz band pass filter 12.

The phase demodulator 13 outputs the data and clock signals by demodulating the modulating signal of the digital sound by either the 5.850 MHz oscillator 12 which is selected through the terminal A of the third switch 20 or the 6.550 MHz oscillator 14 which is selected through the terminal B of the third switch 20.

In more detail, the phase demodulator 13 outputs the data and clock signals by demodulating the modulated digital sound by the oscillating output of the oscillators 14 and 15 which are selected according to whether the control signal BG/I indicates a PAL-I or PAL-B/G signal.

The data and clock signals of the phase demodulator are applied to the NICAM decoder.

The NICAM decoder supplies the digital sound data and clock signal to a digital-to-analog converter.

Thus, the digital-to-analog converter produces analog stereophonic audio signals corresponding to the input digital signals, the left (L) and the right (R) sound signals of the stereophonic signals being formed into final sound signals.

As mentioned above, in the example of the illustrated embodiment of the present invention, only the intermediate frequency of 38.9 MHz is output from the tuner 1 for a compatible design.

In addition, the receiving apparatus is provided with a plurality of switches which are operated by a control signal supplied from the outside, based on whether the input signal to the apparatus is PAL-I NICAM broadcast standard or PAL-B/G NICAM broadcast standard.

As a result, the illustrated dual NICAM broadcast receiving circuit can receive video and audio signals derived from both PAL-I and PAL-B/G systems in spite of the difference in the broadcast mode thereof, so that the illustrated apparatus might be widely utilized in the European area.

The reader's attention is directed to all papers and documents which are filed concurrently with or previous to this specification and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A dual NICAM broadcast receiving apparatus for receiving both a PAL-I type NICAM broadcast and a PAL-B/G type NICAM broadcast, the apparatus comprising :

a video signal processing unit (100) for amplifying and detecting an intermediate frequency from a tuner (1) according to channel selection controlled by a microcomputer (2), and for extracting and processing only a video signal ; and

an audio signal processing unit (200) for processing a main channel audio signal by detecting the intermediate frequency output from the tuner (1) through a sound intermediate frequency (SIF) detector (8), and for processing subchannel signals by outputting an analog signal through a D/A converter (17) after passing through a respective filter (11, 12) selected by a control signal (BG/I) based on whether the subchannel signal output from the SIF detector (8) is PAL-I type broadcast standard or PAL-B/G type broadcast standard.

2. A dual NICAM broadcast receiving circuit as claimed in claim 1, wherein said video processing unit (100) comprises a video intermediate frequency (VIF) surface acoustic wave (SAW) filter (3) for passing video intermediate frequency, a VIF detector (4) for outputting a composite video signal by video-detecting and demodulating the output signal from said SAW filter (3), and an audio signal trap means (5, 6) for eliminating audio signals from the output signal of the video detector (4).

3. A dual NICAM broadcast receiving apparatus as claimed in claim 1 or 2, wherein said audio signal processing unit (200) comprises :

said SIF detector (8) for outputting the main channel and subchannel audio signals by detecting the intermediate frequency output from the tuner (1) through a SIF SAW filter (7) ;

switching means (19) for selectively switching the subchannel audio signals in response to said control signal (BG/I), based on whether the signals are PAL-I signals or PAL-B/G signals ;

band pass filters (11, 12) for selectively passing each signal based on the output of the switching means (19) ;

a phase demodulator (13) for outputting data and output signals by demodulating a digital sound modulating signal according to the output of an oscillator (14, 15) which is selectively operated by the signal output from the band pass filters (11, 12) ;

a NICAM decoder (16) for processing data and clock signals output from the demodulator (13) ; and

said digital-to-analog converter (17) for converting the output signal from the NICAM decoder (16) to said analog signal and for outputting left and right channel signals.

4. A dual NICAM broadcast receiving apparatus as claimed in any of claims 1 to 3, wherein only an intermediate frequency of 38.9 MHZ is output from the tuner (1).

5. A dual NICAM broadcast receiving apparatus as claimed in any of the preceding claims, wherein a 5.5 MHZ filter (9) which is used to pass PAL-B/G signals and a 6.0 MHZ filter (10) which is used to pass PAL-I signals are connected to the SIF detector (8).

6. A dual NICAM broadcast receiving apparatus as claimed in claim 5, wherein a switching means (18) is connected between said 5.5 MHZ filter (9) and said 6.0 MHZ filter (10) for selectively switching said two filters.

7. A dual NICAM broadcast receiving apparatus as claimed in claim 3 or any of claims 4 to 6 as appendant thereto, wherein said band pass filters (11, 12) comprise a first band pass filter (11) for passing PAL-B/G type broadcast signals and a second band pass filter (12) for passing PAL-I type broadcast signals.

8. A dual NICAM broadcast receiving apparatus as claimed in claim 3, or any of claims 4 to 7 as appendant thereto, wherein a switching means (20) is connected between the phase demodulator (13) and the oscillator (14, 15) for selectively switching the output of the oscillator (14, 15).

9. A dual NICAM broadcast receiving apparatus as claimed in claims 6 and 8, wherein said switching means (18-20) are selectively switched by an external control signal (BG/I).

FIG.1

## FIG.2A

VISION CARRIER

ANALOG SOUND
SUBCARRIER(6.0MHz)

PAL–I

DIGITAL SOUND
SUBCARRIER (6.552MHz)

−2 −1 0 1 2 3 4 5 6 7 →MHz

## FIG.2B

VISION CARRIER

ANALOG SOUND
SUBCARRIER (5.5MHz)

PAL–B/G

DIGITAL SOUND
SUBCARRIER (5.850MHz)

−2 −1 0 1 2 3 4 5 6 7 →MHz

EP 0 437 965 A2